# NEUE EUROPÄISCHE PATENTSCHRIFT

(11) **EP 1 982 091 B2**
(45) Veröffentlichungstag und Bekanntmachung des Hinweises auf die Entscheidung über den Einspruch: **25.12.2019**
(45) Hinweis auf die Patenterteilung: 29.12.2010
(21) Anmeldenummer: 07703012.0
(22) Anmeldetag: 25.01.2007
(51) Int. Cl.: F16D 69/04

(54) **BREMSBELAG FÜR EINE SCHEIBENBREMSE**
BRAKE LINING FOR A DISK BRAKE
GARNITURE DE FREIN POUR FREIN À DISQUE

(30) Priorität: 01.02.2006 DE 102006004550
(43) Veröffentlichungstag der Anmeldung: 22.10.2008
(73) Patentinhaber: KNORR-BREMSE Systeme für Nutzfahrzeuge GmbH, 80809 München (DE)
(72) Erfinder: GASSLBAUER, Franz, 84381 Johanniskirchen (DE)
(74) Vertreter: Specht, Peter
(86) Internationale Anmeldenummer: PCT/EP2007/000615
(87) Internationale Veröffentlichungsnummer: WO 2007/088004

(56) Entgegenhaltungen:
- EP-A1- 1 484 524
- EP-A2- 0 902 210
- CA-A1- 2 391 183
- DE-C1- 19 532 019
- DE-U- 1 957 751
- GB-A- 2 245 667
- GB-A- 2 299 382
- GB-A- 2 303 891
- US-A- 4 799 579

## Beschreibung

Die Erfindung betrifft einen Bremsbelag für eine Scheibenbremse entsprechend dem Oberbegriff des Anspruchs 1.

Scheibenbremsen für Fahrzeuge, insbesondere für Nutzfahrzeuge umfassen neben einer Bremsscheibe auch zwei Bremsbeläge, die im Bedarfsfall, also bei einer Bremsung, gegen die Reibflächen einer Bremsscheibe pressbar sind.

Dabei besteht jeder Bremsbelag aus einer Belagträgerplatte und einem darauf befestigten Reibbelag, der in Gebrauchsstellung reibend an der zugeordneten Reibfläche der Bremsscheibe anliegt.

Der Verbindung des Reibbelages mit der Belagträgerplatte kommt eine besondere Bedeutung zu, da hohe Belastungen auftreten, die aus betriebsbedingten Stößen und einer beim Bremsen entstehenden Reibungswärme resultieren.

Um eine entsprechend feste Verbindung herzustellen, die neben der genannten Stoß- bzw. Wärmebelastung auftretende Biege- und Scherbeanspruchungen aufnehmen kann, ist es beispielsweise aus der DE 195 32 019 C1 bekannt, an einen Grundkörper der Belagträgerplatte Formschlussmittel in Form von runden oder eckigen, noppenförmigen Erhebungen anzuformen. Zur Verankerung des Reibbelages, insbesondere zur Aufnahme von Scherkräften, sind diese Formschlussteile mit Hinterschneidungen versehen, die allerdings nur in einem sehr aufwendigen Verfahren herstellbar sind. Dabei wird der Reibbelag formschlüssig nur an den Formschlussteilen gehalten, so dass die Gefahr besteht, dass bei einem Reißen des Reibbelages sich Teile davon lösen, was nicht nur die Funktionsfähigkeit der Scheibenbremse insgesamt sehr stark einschränkt, sondern möglicherweise zu deren Ausfall führt, da die gelösten Teile im Bremssattel verkanten können und die Verschiebebewegung der Bremsbeläge und/oder der Bremsscheibe behindern.

Darüber hinaus ist die Herstellung des bekannten Bremsbelages sehr kostenintensiv, vor allem auch deshalb, weil die im Modell zum Einsatz kommenden, aus einem Elastomer bestehenden Formkörper zur Ausbildung der Formschlussmittel der Belagträgerplatte einem hohen Verschleiß unterliegen und von daher häufig ersetzt werden müssen. Gerade weil solche Bremsbeläge in großen Stückzahlen Verwendung finden, kommt diesem Umstand eine besondere Bedeutung zu.

Der Erfindung liegt daher die Aufgabe zugrunde, einen Bremsbelag der gattungsgemäßen Art so weiter zu entwickeln, dass er kostengünstiger herstellbar ist und seine Funktionssicherheit verbessert wird.

Diese Aufgabe wird durch einen Bremsbelag mit den Merkmalen des Anspruchs 1 gelöst.

Durch diese konstruktive Ausbildung des Bremsbelages ist sowohl eine kostengünstigere Herstellung möglich als auch eine Verbesserung der Haftung des Reibbelages am Grundkörper.

Da auf gezielt einzubringende Hinterschneidungen verzichtet wird, kann die Belagträgerplatte wesentlich einfacher und preiswerter gegossen werden. Dies betrifft sowohl den Guss selbst und vorbereitende Arbeiten, wie das Herstellen einer Sandform und dergleichen, wie auch die nun mögliche unproblematische Herstellung der Gießform, bei der auf den Einsatz von entsprechend elastischen Formmitteln verzichtet werden kann, so dass sich eine wesentlich höhere Standzeit des entsprechenden Modells ergibt. Alles in allem führt die Erfindung zu einer wesentlichen Kostenreduzierung des Bremsbelages, die unter dem Aspekt der genannten Serienfertigung eine besondere Bedeutung hat.

Zwar wird auf die Einbringung vorbestimmter Hinterschneidungen verzichtet, jedoch führt allein schon die fertigungsbedingte Rauigkeit der gegossenen Oberfläche zu einer Verkrallung des Reibbelages mit den erhabenen Formschlussteilen ebenso wie mit der Oberfläche des Grundkörpers im übrigen. Für eine zusätzliche Sicherheit der Halterung des Reibbelages an der Belagträgerplatte sorgt die Einbettung des Reibbelages in die wenigstens einen Teil der Formschlussteile umgebenden Vertiefungen des Grundkörpers, die eine bessere Aufnahme von auftretenden Scherkräften ermöglichen und zudem einen besseren Halt von Reibbelagteilen garantieren, wenn der Reibbelag beispielsweise durch Rissbildungen zerstört wird. D.h., die Reibbelagteile bleiben auch dann an der Bremsträgerplatte haften, wenn die Bremse sich außer Eingriff befindet, also gelöst ist.

Die Formschlussteile können in ihrer Form, Dimensionierung und Anordnung unterschiedlich gestaltet sein. Dabei ist die Konfiguration der Formschlussmittel im wesentlichen abhängig von der Aufnahme der beim Bremsen auftretenden Kräfte, der entstehenden Temperatur und der Beschaffenheit der eingesetzten Reibmaterialien, die durch verschiedene Herstellungsprozesse und Zusammensetzungen unterschiedlich sein können.

So können die Formschlussmittel in Form von runden oder rechteckigen Stiften angeformt sein, die zueinander versetzt, in einer Reihe oder in einer oder mehreren Richtungen schräg verlaufend angeordnet sind. Denkbar ist auch die Formschlussmittel als mäandrierende Stege auszubilden, die beispielsweise parallel zueinander verlaufend angegossen sind.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figuren 1 - 3: jeweils ein Ausführungsbeispiel einer Belagträgerplatte eines erfindungsgemäßen Bremsbelages in einer perspektivischen bzw. einer Draufsicht
- Figur 4: einen Schnitt durch die Belagträgerplatte nach Figur 3 in einer perspektivischen Ansicht.

In den Figuren ist jeweils ein Ausführungsbeispiel einer Belagträgerplatte 1 dargestellt, die Bestandteil eines Bremsbelages ist, der überdies einen nicht gezeigten Reibbelag aufweist, der unter Kontaktierung von Formschlussmitteln 3 fest mit der Belagträgerplatte verbunden ist.

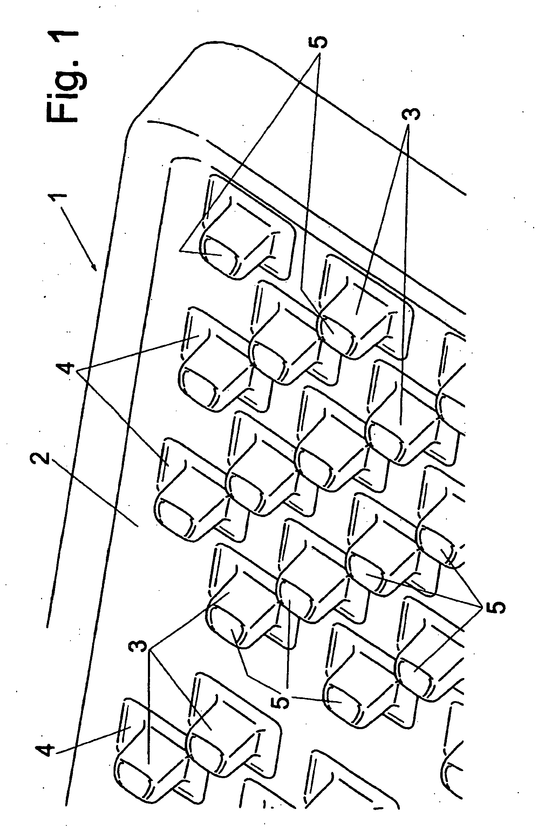

Die Formschlussmittel 3 der aus einem Gussmaterial bestehenden Belagträgerplatte 1 sind an einen flächenförmigen Grundkörper 2 angegossen und bei dem in der Figur 1 gezeigten Beispiel als in versetzten Reihen nebeneinander liegende, im Querschnitt quadratisch oder rechteckig ausgebildete Stifte geformt.

Erfindungsgemäß sind die Formschlussmittel 3 jeweils von einer angrenzenden Vertiefung 4 des Grundkörpers 2 umgeben, in die der aufzubringende Reibbelag eingefügt wird.

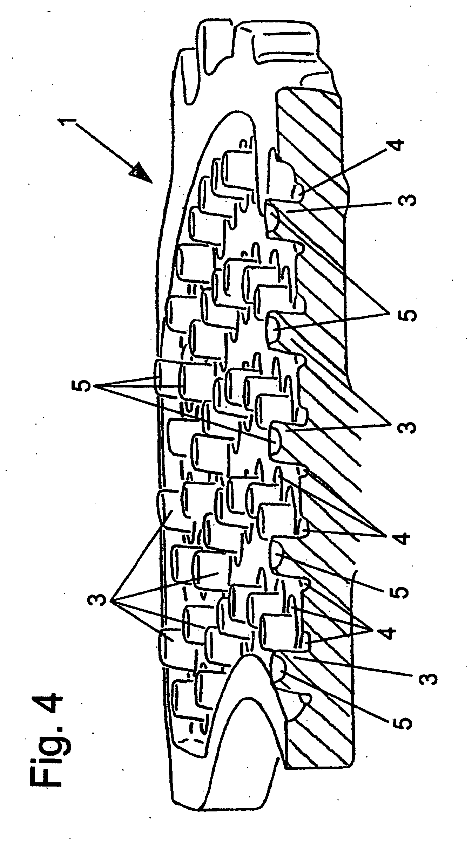

Die der Grundplatte 2 abgewandte freie Stirnseite des Formschlussmittels 3 ist mit einer Ausnehmung 5 versehen, die, wie insbesondere die Figur 4 sehr deutlich zeigt, muldenförmig ausgebildet ist, sich aber auch durchaus tiefer in das Formschlussmittel erstrecken kann.

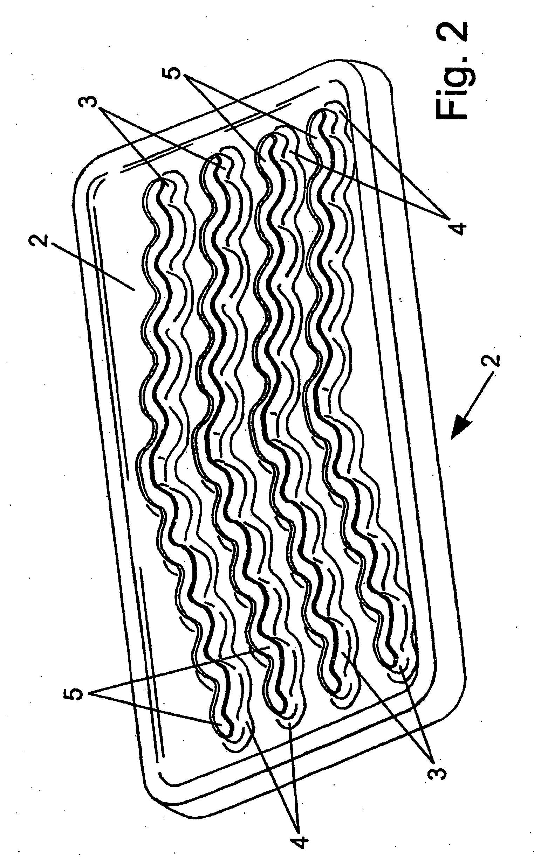

In dem in der Figur 2 erkennbaren Beispiel sind die Formschlussmittel 3 als mäanderformig verlaufende Stege ausgebildet, von denen mehrere parallel und abständig zueinander angeordnet sind und jeweils von einer Vertiefung 4 umgeben sind, während auch hier die freie Stirnseite eine Ausnehmung 5 aufweist.

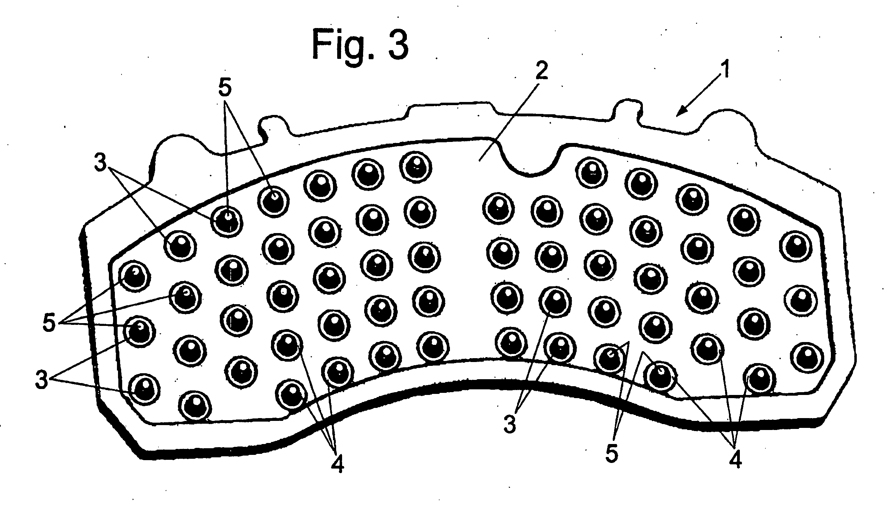

Vergleichbar dem Ausführungsbeispiel in Figur 1 ist das in der Figur 3 gezeigte Beispiel, bei dem die Formschlussmittel 3 gleichfalls als Stifte geformt sind, im Querschnitt jedoch rund und ebenso wie die in den anderen Beispielen dargestellten Formschlussmittel 3 mit Ausnehmungen 5 versehen.

Die die Formschlussmittel 3 umgebenden Vertiefungen 4 sind in diesem Fall im Sinne von Kreisringen ausgebildet, wie in der Figur 4 erkennbar ist.

Die Ausnehmungen 5 sorgen ebenso wie die Vertiefungen 4 für eine feste Verankerung des Reibbelages, insbesondere auch hinsichtlich der Aufnahme von auftretenden Scherkräften.

## Patentansprüche

1. Bremsbelag für eine Scheibenbremse eines Fahrzeuges, insbesondere eines Nutzfahrzeuges, mit einer als Gussteil ausgebildeten Belagträgerplatte (1) und einem darin befestigten Reibbelag, wobei die Belagträgerplatte (1) einen flächenförmigen Grundkörper (2) und daran angegossene, erhabene Formschlussteile (3) aufweist, die von dem Reibbelag umschlossen sind, **dadurch gekennzeichnet, dass** zumindest ein Teil der Formschlussteile (3) jeweils von einer angrenzenden Vertiefung (4) des flächenförmigen Grundkörpers (2) umgeben ist.

2. Bremsbelag nach Anspruch 1, **dadurch gekennzeichnet, dass** zumindest ein Teil der Formschlussteile (3) auf ihren dem Grundkörper (2) abgewandten freien Stirnseiten jeweils eine Ausnehmung (5) aufweisen, zur zusätzlichen Verankerung des Reibbelages.

3. Bremsbelag nach Anspruch 1 oder 2, **dadurch gekennzeichnet, dass** die Formschlussteile (3) stiftförmig ausgebildet sind und einen mehreckigen oder runden Querschnitt aufweisen.

4. Bremsbelag nach einem der vorhergehenden Ansprüche, **dadurch gekennzeichnet, dass** die stiftförmigen Formschlussteile (3) in versetzt zueinander stehenden Reihen angeordnet sind.

5. Bremsbelag nach einem der vorhergehenden Ansprüche, **dadurch gekennzeichnet, dass** die Formschlussteile (3) als Stege ausgebildet und abständig zueinander angeordnet sind.

6. Bremsbelag nach einem der vorhergehenden Ansprüche, **dadurch gekennzeichnet, dass** die stegförmigen Formschlussteile (3) mäanderförmig verlaufen.

7. Bremsbelag nach einem der vorhergehenden Ansprüche, **dadurch gekennzeichnet, dass** die stegförmigen Formschlussteile (3) parallel zueinander verlaufen.

8. Bremsbelag nach einem der vorhergehenden Ansprüche, **dadurch gekennzeichnet, dass** die Ausnehmungen (5) muldenförmig ausgebildet sind.

9. Bremsbelag nach einem der vorhergehenden Ansprüche, **dadurch gekennzeichnet, dass** die Ausnehmungen (5) in ihrer Tiefe etwa der Höhe der Formschlussteile (3) entsprechen.

## Claims

1. Brake pad for a disc brake of a vehicle, in particular of a commercial vehicle, with a backing plate (1) formed from cast iron and a friction lining fixed therein, wherein the backing plate (1) has a planar base body (2) and raised positive-locking parts (3) cast thereon, which are enclosed by the friction lining, **characterised in that** at least a part of the positive-locking parts (3) is in each case surrounded by an adjoining indentation (4) of the planar base body (2).

2. Brake pad according to claim 1, **characterised in that** at least a part of the positive-locking parts (3) has on the free end faces remote from the base body (2) a recess (5) each for the additional anchorage of the friction lining.

3. Brake pad according to claim 1 or 2, **characterised in that** the positive-locking parts (3) are pin-shaped in design and have a polygonal or circular cross-section.

4. Brake pad according to any of the preceding claims, **characterised in that** the pin-shapes positive-locking parts (3) are arranged in rows which are offset relative to one another.

5. Brake pad according to any of the preceding claims, **characterised in that** the positive-locking parts (3) are designed as webs and are arranged at a distance from one another.

6. Brake pad according to any of the preceding claims, **characterised in that** the web-shaped positive-locking parts (3) extend in a meandering shape.

7. Brake pad according to any of the preceding claims, **characterised in that** the web-shaped positive-locking parts (3) extend parallel to one another.

8. Brake pad according to any of the preceding claims, **characterised in that** the recesses (5) are trough-shaped in design.

9. Brake pad according to any of the preceding claims, **characterised in that** the recesses (5) correspond in their depth approximately to the height of the positive-locking parts (3).

## Revendications

1. Garniture de frein pour un frein à disque d'un véhicule, notamment d'un véhicule utilitaire, comprenant une plaque (11) de support de garniture constituée sous la forme d'une pièce coulée et une garniture de friction qui y est fixée, la plaque (11) de support de garniture ayant un corps (2) de base de forme plane et des parties (3) à complémentarité de forme en saillie, qui y sont coulées et qui sont entourées de la garniture de friction, **caractérisée en ce qu'**au moins une partie des parties (3) à complémentarité de forme est entourée respectivement au moins par endroit d'une cavité (4) adjacente du corps (2) de base de forme plane.

2. Garniture de frein suivant la revendication 1, **caractérisée en ce qu'**au moins une partie des parties (3) à complémentarité de forme ont, sur leurs côtés frontaux libres éloignés du corps (2) de base, respectivement un évidement (5) pour l'ancrage supplémentaire de la garniture de friction.

3. Garniture de frein suivant la revendication 1 ou 2, **caractérisée en ce que** les parties (3) à complémentarité de forme sont constituées sous la forme de tiges et ont une section transversale polygonale ou circulaire.

4. Garniture de frein suivant l'une des revendications précédentes, **caractérisée en ce que** les parties (3) à complémentarité de forme, en forme de tige, sont disposées suivant des rangées décalées les unes par rapport aux autres.

5. Garniture de frein suivant l'une des revendications précédentes, **caractérisée en ce que** les parties (3) à complémentarité de forme sont constituées sous la forme de nervures et sont disposées à distance les unes des autres.

6. Garniture de frein suivant l'une des revendications précédentes, **caractérisée en ce que** les parties (3) à complémentarité de forme, en forme de nervure, s'étendent sinueusement.

7. Garniture de frein suivant l'une des revendications précédentes, **caractérisée en ce que** les parties (3) à complémentarité de forme, en forme de tige, sont parallèles les unes aux autres.

8. Garniture de frein suivant l'une des revendications précédentes, **caractérisée en ce que** les évidements (5) sont constitués en forme d'auge.

9. Garniture de frein suivant l'une des revendications précédentes, **caractérisée en ce que** les évidements (5) correspondent dans leur profondeur à peu près à la hauteur des parties (3) à complémentarité de forme.
